# EUROPEAN PATENT SPECIFICATION

(11) **EP 1 890 184 B1**
(45) Date of publication and mention of the grant of the patent: **18.11.2015**
(21) Application number: 06757004.4
(22) Date of filing: 06.06.2006
(51) Int. Cl.: B29D 11/00, G02C 7/02, B05D 7/24, G02C 7/10, G02C 13/00

(54) **METHOD FOR MANUFACTURING PLASTIC LENS HAVING COAT LAYER, AND LENS SUPPORTING TABLE**
VERFAHREN ZUR HERSTELLUNG EINER KUNSTSTOFFLINSE MIT EINER BESCHICHTUNGSSCHICHT UND LINSENHALTETISCH
PROCÉDÉ DE FABRICATION D UNE LENTILLE PLASTIQUE AYANT UNE COUCHE D ENDUCTION, ET TABLE SUPPORT DE LENTILLE

(30) Priority: 07.06.2005 JP 2005166596
(43) Date of publication of application: 20.02.2008
(73) Proprietor: Tokuyama Corporation, Shunan-shi, Yamaguchi-ken 745-8648 (JP)
(72) Inventor: TAKAHASHI, Naoto, c/o TOKUYAMA CORPORATION, Shunan-shi, Yamaguchi 7458648 (JP); MORI, Katsuhiro, c/o TOKUYAMA CORPORATION, Shunan-shi, Yamaguchi 7458648 (JP)
(74) Representative: Kador & Partner
(86) International application number: PCT/JP2006/311264
(87) International publication number: WO 2006/132200

(56) References cited:
- DE-U1- 29 514 317
- GB-A- 1 109 586
- JP-A- H04 201 039
- JP-A- 2000 334 369
- JP-A- 2003 270 505
- JP-A- 2004 012 857
- JP-A- 2004 202 679
- JP-A- 2006 231 282
- US-A- 5 695 393

## Description

### FIELD OF THE INVENTION

The present invention relates to a process for producing plastic lenses coated with a coating, more particularly to a simple and reliable process for producing coated plastic lenses such as eyeglass lenses. The invention is also concerned with a lens holder suitable for use in the process.

### BACKGROUND OF THE INVENTION

Photochromism is the reversible phenomenon whereby compounds quickly change color upon exposure to UV-containing light such as the sunlight and the light of a mercury lamp, and change back to the original color when placed in a dark place away from the light, and is widely used for various applications.

One of the applications is in the field of eyeglass lenses, in which photochromic plastic lenses are manufactured by curing polymerizable monomers containing photochromic compounds. The photochromic compounds suitable for this application include fulgimide compounds, spirooxazine compounds and chromene compounds.

Known as processes for producing plastic lenses having a photochromic property include a process in which lenses having no photochromic property are impregnated on surfaces with photochromic compounds (hereinafter referred to as an imbibition process), a process in which a coating having photochromic property is formed on the surfaces of plastic lenses (hereinafter referred to as a coating process), and a process in which a photochromic compound is dissolved in a monomer and the monomer is polymerized to thereby directly obtain photochromic lenses (hereinafter referred to as an in mass process).

Patent Document 1 discloses a coating process in which a photochromic compound is dissolved in a urethane oligomer, this coating agent is applied to the surface of a lens, and the coating is heat-cured using infrared rays at 140°C for 40 minutes.

Patent Document 2 discloses a method in which a photochromic compound is dissolved in a mixture of monofunctional, difunctional and multifunctional radically polymerizable monomers, the resultant coating agent is applied to the inner surface of a glass mold followed by photocuring, and a monomer is injected into the mold followed by heat curing.

Patent Document 3 discloses a method in which a mixed coating agent including an N-alkoxymethyl (meth)acrylamide, a catalyst (preferably an acidic catalyst) and a photochromic compound is applied to a lens, and the coating is cured by heating at 140°C for 40 minutes.

Patent Document 4 discloses a method in which a photochromic compound is dissolved in a monomer composition consisting essentially of at least two difunctional (meth)acrylate monomers, and the resultant coating agent is applied to a lens and is photocured using a 500W lamp. The surface temperature of the lens during the photocuring is in the range of 145 to 200°C.

However, these processes have such insufficiencies in producing coated plastic lenses that it makes difficult to sufficiently cure the coating agent applied on the surface of the plastic lens without deforming the plastic lens.

The present inventors studied curing of the photocurable coating agents applied on the surface of the plastic lenses. Consequently, it has been found that when a plastic lens coated with a photocurable coating agent is held with the coated surface upward, deformation occurs in a central thinner area of the plastic lens when high-intensity light is applied to photopolymerize the coating agent. The deformation is brought about because the plastic lens is softened by heat from the light source used in the curing and consequently cannot withstand stress produced when the coating agent is cured. This problem is particularly prominent when the plastic lens has a central area less than 2 mm in thickness and a peripheral area thicker than the central area.

Lowering the irradiation intensity to prevent the above problem results in insufficient curing of the coating agent and consequent insufficient adhesion between the plastic lens and the photochromic layer, and causes reduced surface hardness. Prolonged curing lowers productivity.

To solve these problems, nearest prior art document Patent Document 5 discloses that a photocurable coating agent applied to the surface of a plastic lens is photocured at a surface temperature of the plastic lens of not more than 100°C.
[Patent Document 1] WO 98/37115
[Patent Document 2] US Patent No. 5914174
[Patent Document 3] WO 00/36047
[Patent Document 4] WO 01/02449
[Patent Document 5] JP-A-2004-012857

### DISCLOSURE OF THE INVENTION

### PROBLEMS TO BE SOLVED BY THE INVENTION

In Patent Document 5, the surface temperature of the plastic lens is controlled to not more than 100°C by manipulating the intensity and time of irradiation to the plastic lens.

However, this method requires intermittent irradiation and consequently the photocuring of the coating material takes a prolonged time, to thereby causing lower productivity. Furthermore, the intensity and time of irradiation should be controlled depending on the central thickness of the lens, entailing complicated operations. The photocuring time may be shortened to some extent by cooling the plastic lens by circulating cold water in tubes in contact with the back and side surfaces of the plastic lens. However, the structure of the apparatus is complicated, and the cooling effects vary between where the tubes and the plastic lens are in contact with each other and where they are not in contact.

It is therefore an object of the present invention to provide a process whereby a photocurable' coating agent is applied to the surface of a plastic lens having a central area less than 2 mm in thickness and thinner than the peripheral area, and the coating agent is cured to produce an objective coated plastic lens without a special cooling apparatus, with high productivity, and without deforming the lens. It is another object of the invention to provide a lens holder suited for use in the process.

### MEANS FOR SOLVING THE PROBLEMS

The present inventors studied diligently to solve the aforementioned problems. As a result, it has been found that the problems are solved when a lens is held such that it is not deformed even when the lens is softened by heat during photoirradiation and undergoes stress produced by curing of the coating. The present invention has been completed based on the finding. Specifically, a process for producing a coated lens according to the present invention comprises a first step in which an uncured coating is formed on a surface of a plastic lens, wherein the uncured coating comprises a photocurable composition, the plastic lens has a central area less than 2 mm in thickness and a peripheral area thicker than the central area; and a second step in which the lens having the uncured coating is held on a lens holder with the uncured coating upward, and light is applied from above the lens to cure the coating, characterized in that:
in the second step, the lens is held while satisfying the following conditions (1) and (2):
   (1) a lens holder comprising a lens-contact member that comprises an elastic material that has a surface configuration substantially conforming with an area of a back surface of the plastic lens that is less than 2 mm in thickness, or a material capable of plastic deformation in agreement with the area of the back surface of the lens is used as the lens holder ; and
   (2) the lens is held on the lens holder in such a manner as putting the lens-contact member in close contact with the entire area of the back surface of the plastic lens that is less than 2 mm in thickness.

A lens holder according to the present invention comprises a lens holder body and a lens-contact member detachably fixed to the lens holder body, wherein
the lens-contact member comprising an elastic material or a plastically deformable material, and
the lens-contact member having a surface area including at least a central area that substantially conforms with an area of a back surface of a lens held thereon that includes at least a central area of the lens.

Further embodiments of the invention are defined in the dependent claims.

### EFFECTS OF THE INVENTION

According to the process of the present invention, a photocurable coating agent is applied to the surface of a plastic lens having a central area less than 2 mm in thickness and thinner than the peripheral area, and the coating agent is cured to produce an objective coated plastic lens without deforming the lens. The process permits use of a high-power light source for irradiation without particular attentions to irradiation conditions, enabling high productivity. The process does not require any special apparatus for cooling the lens, leading to cost and size reduction of the production apparatus.

### BRIEF DESCRIPTION OF THE DRAWINGS

Fig. 1 is a sectional view illustrating a representative holder suitably used in a process of the present invention;
Fig. 2 is a sectional view illustrating a representative holder suitably used in a process of the present invention; and
Fig. 3 illustrates a lens held on the holder shown in Fig. 2.

### DESCRIPTION OF THE CODES

1: material lens base
1a: surface (on which an uncured coating is formed)
1b: back surface
2: lens holder
3: lens-contact member
3a: lens-contact surface
4: lens holder body
5a: plastically deformable material
5b: plastically deformable material (in close contact with the lens)

### PREFERRED EMBODIMENTS OF THE INVENTION

In the process of the invention, a coating is formed on the surface of a plastic lens (hereinafter, material lens substrate) having a central area less than 2 mm in thickness and a peripheral area thicker than the central area, wherein the coating is a cured product of a photocurable resin, to thereby manufacturing coated lenses. When using plastic lenses other than the plastic lens having a central area less than 2 mm in thickness and a peripheral area thicker than the central area, the process of the invention is less advantageous because it is unlikely that such lenses are deformed by heat during the production steps.

The plastic lenses for use in the invention are not particularly limited and common plastic lenses are employed as long as they have a central area less than 2 mm in thickness and a peripheral area thicker than the central area. Of the general eyeglass plastic lenses, concave meniscus lenses for nearsightedness frequently satisfy these conditions because the concave meniscus lenses gradually increase the thickness in the periphery relative to the central area as their minus Dioptry become large. The process of the invention is particularly effective for producing a cured coating from a photocurable composition on the surface of a plastic lens having large minus Dioptry.

The raw materials of the material lens substrate are not particularly limited and include known resins such as (meth)acrylic resins, polycarbonate resins, allyl resins, thiourethane resins, urethane resins and thioepoxy resins.

The process of the invention employs the specific plastic lens (material lens substrate) and is identical in fundamental steps with the conventional processes for producing plastic lenses having cured coatings from photocurable resins. The process of the invention includes a first step in which a photocurable composition is applied to the surface of a plastic lens substrate to form an uncured coating; and a second step in which the lens having the uncured coating is held on a lens holder with the uncured coating upward, and light is applied from above the lens to cure the coating.

The photocurable composition used in the first step is a so-called photocurable coating agent and includes a photopolymerizable monomer and a photopolymerization initiator as essential components. Examples of the photopolymerizable monomers include radically polymerizable monomers having radically polymerizable groups such as (meth)acryloyl group, (meth) acryloyloxy group, vinyl group, allyl group and styryl group. Of these, radically polymerizable monomers having (meth)acryloyl group or (meth)acryloyloxy group are preferable because of easy availability and good curability. The radically polymerizable monomers may be appropriately used in combination of two or more kinds in view of properties of cured products from the photocurable coating agents, such as solvent resistance, hardness and heat resistance.

The photopolymerization initiator is generally used in an amount of 0.001 to 5 parts by mass based on 100 parts by mass of the radically polymerizable monomers in total. Suitable examples of the photopolymerization initiators include benzoin, benzoin methyl ether, benzoin butyl ether, benzophenol, acetophenone, 4,4'-dichlorobenzophenone, diethoxyacetophenone, 2-hydroxy-2-methyl-1-phenylpropane-1-one, benzylmethylketal, 1-(4-isopropylphenyl)-2-hydroxy-2-methylpropane-1-one, 1-hydroxycyclohexyl phenyl ketone, 2-isopropylthioxanthone, bis(2,6-dimethoxybenzoyl-2,4,4-trimethyl-pentylphosphine oxide, bis(2,4,6-trimethylbenzoyl)-phenylphosphine oxide, 2,4, 6-trimethylbenzoyldiphenyl-phosphine oxide and 2-benzyl-2-dimethylamino-1-(4-morpholinophenyl)-butanone-1.

The photocurable composition may be conventional photocurable coating agents without particular limitation depending on the purposes such as increasing the surface hardness, achieving photochromic properties, improving impact resistance, and increasing the adhesion with respect to the hard coating or antireflection layer. For increased surface hardness, the composition preferably includes a monomer with three or more radically polymerizable groups and/or an organic-inorganic hybrid monomer. For photochromic properties, a "photocurable coating agent containing a photochromic compound" as disclosed in Patent Document 5 is preferable, more particularly a composition is preferable which contains 100 parts by mass of a photopolymerizable monomer composition including a high-hardness monomer (generally having three or more radically polymerizable groups) and a low-hardness monomer (generally having two radically polymerizable groups and having a structure such as a long hydrocarbon chain or polyethylene oxide chain between the polymerizable groups), and 0.1 to 20 parts by mass, particularly 0.5 to 15 parts by mass of a photochromic compound such as fulgimide compound, spirooxazine compound or chromene compound. To increase the adhesion between the coating and the plastic lens, the "photocurable coating agent containing a photochromic compound" preferably contains a radically polymerizable monomer having at least one epoxy group and at least one radically polymerizable group in the molecule (hereinafter, epoxy monomer), and an amine compound such as triethanolamine. Also preferably, to increase the adhesion between the coating and the plastic lens, the photocurable coating agent contains a radically polymerizable monomer having a silanol group or a group yielding a silanol group upon hydrolysis (hereinafter, silyl monomer), or a radically polymerizable monomer having an isocyanate group (hereinafter, isocyanate monomer). A heat polymerization initiator may be added in combination with the photopolymerization initiator. Preferred heat polymerization initiators include diacyl peroxides, peroxy esters, percarbonates and azo compounds.

The "photocurable coating agent containing a photochromic compound" may contain additives for improving formability into the coating, preventing yellow discoloration of the coating, improving durability of the photochromic compound being added, and increasing the coloration rate and discoloration rate. Examples of such additives include surfactants, antioxidants, radical trapping agents, UV stabilizers, UV absorbents, releasing agents, coloring inhibitors, antistatic agents, fluorescent dyes, dyes, pigments, perfumes and plasticizers.

In the first step, an uncured coating of the photocurable composition is formed on the surface of the material lens substrate, by applying the photocurable composition to the base surface. Examples of the application methods include known methods without limitation, such as spin coating, spray coating, dip coating, and dip-spin coating. Prior to the application of the photocurable composition, the plastic lens substrate is preferably pretreated to improve the adhesion between the final coating and the substrate. Examples of the pretreatments include chemical treatments with basic or acidic aqueous solutions, polishing treatments with polishing agents, plasma treatments using atmospheric and low-pressure plasma, corona discharge treatments, and UV ozone treatments. Two or more pretreatments may be performed in combination. Another coating (hereinafter, primer) may be provided on the surface of the material lens base to increase the adhesion with respect to the coating and to improve the impact resistance of the plastic lens. The materials of the primers are not particularly limited, and preferred examples include polyurethane resins, epoxy resins and polyacetal resins. In particular, when the photocurable coating agent is applied to achieve photochromic properties, polyurethane resins are preferable in view of excellent adhesion thereto. The method to form primer from polyurethane resins is not particularly limited, and preferred one is that a coating agent containing a moisture-curable polyurethane resin is applied and cured, in which case the primer shows superior adhesion.

In the second step, the lens with the uncured coating obtained in the first step is held on a lens holder with the uncured coating upward, and light is applied from above the lens to cure the coating. To prevent the lens from deforming, it should be held while satisfying the following conditions (1) and (2):
(1) A lens holder comprising a lens-contact member that comprises an elastic material that has a surface configuration substantially conforming with an area of a back surface of the plastic lens (material lens substrate) that is less than 2 mm in thickness, or a material capable of plastic deformation in agreement with the area of the back surface of the lens is used as the lens holder.
(2) The material lens substrate is held on the lens holder in such a manner as putting the lens-contact member in close contact with the entire area of the back surface of the material lens substrate that is less than 2 mm in thickness.

The above conditions prevent the material lens substrate from being deformed by irradiation. This is because the entire area of the back surface of the lens substrate that is less than 2 mm in thickness is in close contact with the lens-contact part, and the heat capacity is increased. Consequently, the temperature hardly increases in the area of the lens substrate that is less than 2 mm in thickness. Moreover, even when the substrate is softened at temperatures exceeding 100°C and undergoes stress caused by the curing of the coating, the material lens substrate retains its shape due to intimate contact with the lens-contact member of the lens holder, to thereby preventing deformation thereof. When the above conditions are not satisfied, preventing the thermal deformation of the material lens base requires the method as descried in Patent Document 5, which involves a special cooling apparatus and controlling of irradiation conditions to cause lowering of the productivity.

Hereinbelow, the lens holder used in the invention and how the material lens substrate is held thereon will be described with reference to the drawings.

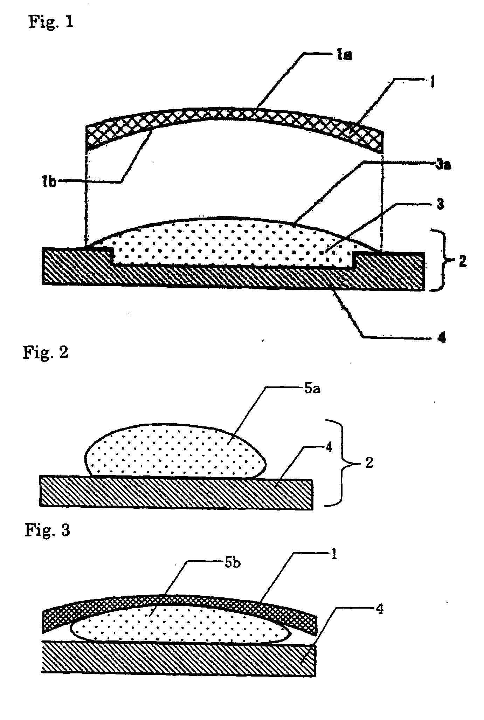

Fig. 1 is a sectional view illustrating a material lens substrate 1 and a lens holder 2. The lens holder 2 includes a lens-contact member 3 and a lens holder body 4. The lens-contact member 3 is detachably fitted with the lens holder body 4. The material lens substrate has a surface 1a coated with an uncured coating (not shown) of a photocurable composition. The lens substrate is held on the lens holder with the surface 1a upward (with a back surface 1b downward). The lens-contact member 3 is composed of an elastic material that has a surface (lens-contact surface 3a) substantially conforming with at least part of the back surface 1b of the material lens substrate 1 that is less than 2 mm in thickness. (Although the figure shows that the lens-contact surface is in contact with the entire back surface of the material lens substrate, the lens-contact surface should at least contact with the part of the back surface of the material lens substrate 1 that is less than 2 mm in thickness. That is, the lens-contact surface does not necessarily contact with the entire back surface.) As used herein, the substantially conforming with surface means that when the material lens substrate is placed on the lens-contact member 3, the surface of the lens-contact member closely contacts with the back surface 1b of the lens substrate. For example, when the material lens substrate is placed, the surface is elastically or plastically deformed by the weight of the lens base or by being lightly pressed, and consequently contacts closely with the lens.

The elastic materials for the lens-contact member 3 may be known rubbers and thermoplastic elastomers without limitation. In view of efficient heat release from the material lens substrate during the irradiation, materials having high heat conductivity and high heat capacity are preferable. Examples of suitable elastic materials include silicone rubbers, urethane rubbers, butyl rubbers, nitrile rubbers, hydrogenated nitrile rubbers, acrylic rubbers, fluororubbers, butadiene rubbers, styrene butadiene rubbers, isoprene rubbers, ethylene propylene rubbers, chloroprene rubbers, natural rubbers and epichlorohydrin rubbers.

The material lens substrate may be held on the lens holder 2 having the lens-contact member 3 while satisfying the condition (2) as follows. The material lens substrate may be placed on the lens-contact member with alignment of a predetermined datum point (for example, the central point) of the lens base with a mating datum point (for example, the central point) of the lens-contact part, followed by lightly pressing as required to bring the back surface of the material lens substrate into close contact with the surface of the lens-contact part. When a material lens substrate having another back surface configuration is treated, the lens-contact member is replaced by another lens-contact member that has a surface configuration fitting the new back surface configuration.

Hereinabove, an embodiment in which the lens-contact member is composed of an elastic material having a specific configuration has been explained. In the process of the invention, the elastic lens-contact member may be replaced by a lens-contact member composed of a "material capable of plastic deformation in agreement with the back surface 1b of the material lens substrate 1". As shown in Fig. 2, the material lens substrate 1 is placed on a lens-contact member 3 composed of a plastically deformable material 5a, followed by pressing. Consequently, as shown in Fig. 3, the plastically deformable material of the lens-contact member is deformed (5b) and conforms with the back surface of the material lens base. In this embodiment, the lens-contact member is beforehand shaped to completely or substantially conform with at least the part of the back surface of the material lens substrate 1 that is less than 2 mm in thickness. This preliminary shaping employs a material lens substrate without any photocurable composition applied thereto. Consequently, the material lens substrate is placed with alignment as described with respect to the elastic lens-contact part, and light stress is applied as required to bring the back surface of the material lens substrate into close contact with the surface of the lens-contact member.

The materials of the lens-contact member are not particularly limited and known materials may be used as long as they are not plastically deformed by weak stress such as that generated when the uncured coating is cured and they are plastically deformed when the material lens substrate is pressed by, for example, human power. Examples of suitable plastically deformable materials include silicone gels, space-sealing polybutene resins, unvulcanized rubbers and oil clays. These materials eliminate the need of replacing the lens-contact member even when material lens substrates having different configurations are treated.

When the uncured coating is cured in the second step, the coating is preferably exposed to light in an atmosphere having an oxygen concentration of not more than 10000 ppm, particularly not more than 1000 ppm, whereby the coating is sufficiently cured without inhibition of polymerization. Preferably, prior to the irradiation, the interior of the apparatus (atmosphere) is thoroughly purged with an inert gas such as nitrogen, argon or helium. Nitrogen is an optimum inert gas in terms of cost.

The process of the invention does not require strict control of irradiation conditions. The light source may be any source used in common photopolymerization apparatuses. Examples of the light sources include electrode lamps such as metal halide lamps, ultra high pressure mercury lamps, high pressure mercury lamps, medium pressure mercury lamps, bactericidal lamps, xenon lamps, carbon arc lamps and tungsten lamps, and electrodeless lamps.

As described above, the process of the invention is capable of curing the uncured coating even at temperatures of the material lens substrate exceeding 100°C without deformation. However, the temperature of the substrate is preferably as low as possible. Accordingly, a known cold reflector is preferably fitted on the light source. The cold reflector reflects light having reduced infrared rays to the precursor lens and thereby reduces the temperature rise at the surface of the precursor lens. For a similar reason, it is also preferable that a filter capable of absorbing or reflecting infrared rays be provided between the light source and the material lens substrate.

The plastic lens having the coating (layer) obtained by the present invention may be used as optical materials as it is. Preferably, a hard coating is formed on the coating. The hard coating provides increased abrasion resistance of the plastic lens.

The hard coating may be formed by applying and curing a hard coating agent by commonly known methods. As the hard coating agents, known hard coating agents can be used without limitation. Specific examples include hard coating agents based on silane coupling agents or oxide sols of silicon, zirconium, antimony and aluminum, and hard coating agents based on organic polymers.

The coated lens produced in the second step may be subjected to a further processing or a secondary treatment, for example an antireflection or antistatic treatment on the coating (or the hard coating which is optionally formed on the coating). The secondary treatment may be performed by depositing a thin film of a metal oxide such as SiO₂, TiO₂ or ZrO₂, or by forming a thin film of an organic polymer.

The present invention will be described in more detail by Examples without limiting the scope of the invention.

### (Example 1)

A denture base silicone soft lining material (trade name: SOFRELINER MEDIUM SOFT manufactured by Tokuyama Dental Corporation) was applied to a space between the back surface of a thiourethane resin plastic lens 1 and a lens holder body 4 made of an acetal resin as shown in Fig. 1. The lining material was allowed to stand at room temperature for one hour to cure. Subsequently, the cured soft lining material (silicone rubber article) was removed from the lens holder body. The extra material protruding on the periphery was cut off to obtain a silicone rubber lens-contact member 3. The lens-contact member 3 was fixed to the lens holder body 4 to produce a lens holder 2.

A thiourethane resin lens substrate (central thickness: 1 mm, peripheral thickness: 7 mm) having an identical configuration of the back surface to the lens substrate used in the production of the lens-contact member 3 was pretreated by soaking it in a 10% aqueous alkaline solution at 60°C for 5 minutes. The lens substrate was washed with pure water and was dried. A photocurable coating agent having a composition as described below was applied to the lens substrate to form an uncured coating. Spin coater 1HDX2 manufactured by MIKASA (600 rpm) was used for forming coating, and the uncured coating formed was 40 µm in thickness.

### [Composition of photocurable coating agent]

· 7 parts by mass of γ-methacryloyloxypropyl trimethoxysilane
· 15 parts by mass of trimethylolpropane trimethacrylate
· 10 parts by mass of polyester oligomer hexaacrylate (EB-1830 manufactured by DAICEL UCB Co., Ltd.)
· 10 parts by mass of glycidyl methacrylate
· 15 parts by mass of polyethylene glycol diacrylate having an average molecular weight of 532
· 50 parts by mass of 2, 2-bis (4-acryloyloxypolyethylene glycol phenyl)propane having an average molecular weight of 776
· 3 parts by mass of N-methyldiethanolamine
· 5 parts by mass of bis(1,2,2,6,6-pentamethyl-4-piperidyl)sebacate
· 0.5 part by mass of IRGACURE 1800: a 3:1 mixture of 1-hydroxycyclohexyl phenyl ketone and bis(2,6-dimethoxybenzoyl)-2,4,4-trimethyl-pentylphosphine oxide
· 2.5 parts by mass of a photochromic compound represented by the following formula:

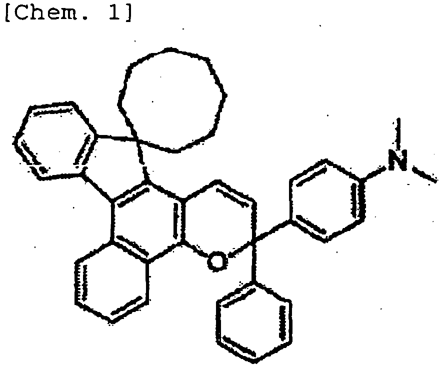

The lens coated with the photocurable coating agent was placed on the lens holder such that the surface (convex surface) coated with the uncured coating was upward and the condition (2) was satisfied. The photocurable coating composition was cured by means of a metal halide lamp equipped with a cold reflector in a nitrogen gas atmosphere at an irradiation intensity of about 100 mW/cm² for 180 seconds. The temperature of the lens surface right after the irradiation was 80°C. The lens holder was removed, and the lens was held with its convex surface downward and was heated at 120°C for 2 hours.

The coated plastic lens as a sample was evaluated for thermal deformation of the plastic lens and adhesion between the coating and the plastic lens. The results are shown in Table 1. The evaluation criteria were as described in (A) and (B):

### (A) Thermal deformation of lens:

After the photopolymerization, the plastic lens was visually observed to check deformation using reflected light of parallel two indoor fluorescent lights. As an evaluation standard, the indoor fluorescent lights were reflected on the convex or concave surface of the plastic lens before the polymerization, and the distance between the two fluorescent light tubes observed on the lens surface was determined as reference value of "1" . The deformation was evaluated on the following four levels:
A: The distance between the fluorescent light tubes observed on the lens with the polymerized coating was from 0. 98 to less than 1.02 relative to the reference value of "1", and the two fluorescent light tubes appeared parallel (the lens was not thermally deformed).
B: The distance between the fluorescent light tubes observed on the lens with the polymerized coating was from 0. 95 to less than 0.98, or from 1.02 to less than 1.05 relative to the reference value of "1", and central areas of the two fluorescent light tubes appeared little deformed as compared to before the polymerization (the lens was little thermally deformed after the polymerization).
C: The distance between the fluorescent light tubes observed on the lens with the polymerized coating was from 0. 90 to less than 0.95, or from 1.05 to less than 1.10 relative to the reference value of "1", and central areas of the two fluorescent light tubes appeared slightly deformed (the lens was slightly thermally deformed after the polymerization).
E: The distance between the fluorescent light tubes observed on the lens with the polymerized coating was less than 0.90 or more than 1.10 relative to the reference value of "1", and the two fluorescent light tubes appeared greatly deformed (the lens was thermally deformed).

### (B) Adhesion between lens and coating:

The plastic lens coated with the cured coating was cut with a sharp-tipped knife such that the coating was cut into one hundred 1 mm x 1 mm squares. Commercially available adhesive cellophane tape was applied to the coating and was quickly peeled. The state of the coating after peeling was visually observed. The adhesion was evaluated on the following five levels (squares that remained after the test/squares before the test).
A: 100/100
B: less than 100/100 to not less than 95/100
C: less than 95/100 to not less than 80/100
D: less than 80/100 to not less than 50/100
E: less than 50/100

### (Examples 2 to 7)

A sample was prepared and evaluated in the same manner as in Example 1, except that the lens had a configuration (central thickness/peripheral thickness) as shown in Table 1 and the irradiation conditions were as shown in Table 1. The results are shown in Table 1.

### (Comparative Examples 1 and 2)

A sample was prepared and evaluated in the same manner as in Example 1, except that the photocurable coating agent was applied to a lens having a configuration (central thickness/peripheral thickness) as shown in Table 1, the lens having the uncured coating was placed on a glass plate having a flat surface with the uncured coating upward, and the coating was exposed to light under conditions as shown in Table 1. The results are shown in Table 1.

### (Example 8)

A spherically-shaped polybutene-based non-drying putty 5a (NEOSEALER MS-N12 manufactured by MATSUMURA OIL CHEMICAL) was placed on a lens holder body 4 made of an acetal resin as shown in Fig. 2. The putty was lightly pressed against the substrate. Consequently, a lens holder 2 was fabricated.

A thiourethane resin lens substrate 1 (central thickness: 1 mm, peripheral thickness: 7 mm) was pretreated by soaking it in a 10% aqueous alkaline solution at 60°C for 5 minutes. The lens substrate 1 was washed with pure water and was dried. The photocurable coating agent described in Example 1 was applied to the lens substrate to form an uncured coating. Spin coater 1H-DX2 manufactured by MIKASA (600 rpm) was used for forming coating, and the uncured coating formed was 40 µm in thickness.

The lens coated with the photocurable coating agent was pressed against the non-drying putty on the lens holder, with the surface (convex surface) coated with the uncured coating upward, as shown in Fig. 3. Consequently, the non-drying putty was plastically deformed, and the lens was placed while satisfying the condition (2).

The lens placed on the lens holder 7 was exposed to light by means of a metal halide lamp equipped with a cold reflector in a nitrogen gas atmosphere at an irradiation intensity of about 100 mW/cm² for 180 seconds. Consequently, the photocurable coating composition was cured. The temperature of the lens surface right after the irradiation was 78°C. The lens holder 7 was removed, and the lens was held with its convex surface downward and was heated at 120°C for 2 hours.

The coated plastic lens as a sample was evaluated for thermal deformation of the plastic lens and adhesion between the coating and the plastic lens in the same manner as in Example 1. The results are shown in Table 1.

### (Examples 9 to 12)

A sample was prepared and evaluated in the same manner as in Example 8, except that the lens had a configuration (central thickness/peripheral thickness) as shown in Table 1 and the irradiation conditions were as shown in Table 1. The results are shown in Table 1.

**[Table 1]**

| | Use of lens holder | Lens configuration (central thickness/ peripheral thickness) (mm) | Irradiation intensity (mW/cm²) | Time (sec) | Accumulated light dose (J/cm²) | Lens surface temperature (°C) | Thermal deformation | Adhesion |
|---|---|---|---|---|---|---|---|---|
| Ex. 1 | Yes | 1/7 | 100 | 180 | 18 | 80 | A | A |
| Ex. 2 | Yes | 1/7 | 150 | 120 | 18 | 92 | A | A |
| Ex. 3 | Yes | 1/7 | 200 | 90 | 18 | 104 | B | A |
| Ex. 4 | Yes | 1/4 | 150 | 120 | 18 | 91 | A | A |
| Ex. 5 | Yes | 1/9 | 150 | 120 | 18 | 92 | A | A |
| Ex. 6 | Yes | 1/9 | 200 | 90 | 18 | 106 | B | A |
| Ex. 7 | Yes | 1.5/37 | 150 | 120 | 18 | 94 | A | A |
| Comp. Ex. 1 | No | 1/7 | 100 | 180 | 18 | 110 | E | A |
| Comp. Ex. 2 | No | 1/9 | 150 | 120 | 18 | 117 | E | A |
| Ex. 8 | Yes | 1/7 | 100 | 180 | 18 | 78 | A | A |
| Ex. 9 | Yes | 1/7 | 150 | 120 | 18 | 89 | A | A |
| Ex. 10 | Yes | 1/7 | 200 | 90 | 18 | 102 | B | A |
| Ex. 11 | Yes | 1/4 | 150 | 120 | 18 | 90 | A | A |
| Ex. 12 | Yes | 1/9 | 150 | 120 | 18 | 90 | A | A |

Table 1 shows that the process of the invention was capable of forming the cured coatings from the photocurable compositions on the surface of the plastic lenses having a central area less than 2 mm in thickness and a peripheral area thicker than the central area, without thermal deformation even when the base temperature exceeded 100°C. Comparative Examples 1 and 2, which performed irradiation without the lens holder according to the invention, resulted in thermal deformation.

### INDUSTRIAL APPLICABILITY

According to the process of the present invention, a photocurable coating agent is applied to the surface of a plastic lens having a central area less than 2 mm in thickness and thinner than the peripheral area, and the coating agent is cured to produce an objective coated plastic lens without deforming the lens. The process permits use of a high-power light source for irradiation without particular attentions to irradiation conditions, enabling high productivity. The process does not require any special apparatus for cooling the lens, leading to cost and size reduction of the production apparatus.

## Claims

1. A process for producing a coated lens, comprising a first step in which an uncured coating is formed on a surface of a plastic lens, wherein the uncured coating comprises a photocurable composition, the plastic lens has a central area less than 2 mm in thickness and a peripheral area thicker than the central area; and a second step in which the lens having the uncured coating is held on a lens holder with the uncured coating upward, and light is applied from above the lens to cure the coating, **characterized in that**:
in the second step, the lens being held while satisfying the following conditions (1) and (2):
(1) a lens holder comprising a lens-contact member that comprises an elastic material that has a surface configuration substantially conforming with an area of a back surface of the plastic lens that is less than 2 mm in thickness, or a material capable of plastic deformation in agreement with the area of the back surface of the lens is used as the lens holder; and
(2) the lens is held on the lens holder in such a manner as putting the lens-contact member in close contact with the entire area of the back surface of the plastic lens that is less than 2 mm in thickness.

2. A lens holder for carrying out the process of claim 1 comprising a lens holder body and a lens-contact member detachably fixed to the lens holder body, wherein
the lens-contact member comprising an elastic material or a plastically deformable material, and
the lens-contact member having a surface area including at least a central area that substantially conforms with an area of a back surface of a lens held thereon that includes at least a central area of the lens.

3. The lens holder according to claim 2, wherein the elastic material of the lens-contact member is at least one material selected from the group consisting of silicone rubbers, urethane rubbers, butyl rubbers, nitrile rubbers, hydrogenated nitrile rubbers, acrylic rubbers, fluororubbers, butadiene rubbers, styrene butadiene rubbers, isoprene rubbers, ethylene propylene rubbers, chloroprene rubbers, natural rubbers and epichlorohydrin rubbers.

4. The lens holder according to claim 2, wherein the plastically deformable material of the lens-contact member is at least one material selected from the group consisting of silicone gels, polybutene resins, unvulcanized rubbers and oil clays.

## Patentansprüche

1. Verfahren zum Herstellen einer beschichteten Linse, umfassend einen ersten Schritt, in dem eine ungehärtete Beschichtung auf einer Oberfläche von einer Kunststofflinse gebildet wird, wobei die ungehärtete Beschichtung eine lichthärtbare Zusammensetzung umfasst, wobei die Kunststofflinse einen zentralen Bereich, der eine Dicke von weniger als 2 mm hat, und einen peripheren Bereich aufweist, der Dicker als der zentrale Bereich ist; und einen zweiten Schritt, in dem die Linse, die eine ungehärtete Beschichtung aufweist, auf einem Linsenhalter mit der ungehärteten Beschichtung nach oben gehalten wird und von oben Licht auf die Linse angewendet wird, um die Beschichtung zu härten, **dadurch gekennzeichnet, dass**:
in dem zweiten Schritt die Linse gehalten wird und zugleich die folgenden Bedingungen (1) und (2) erfüllt sind, nämlich:
(1) dass ein Linsenhalter verwendet wird, der ein Linsenkontaktelement umfasst, das ein elastisches Material umfasst, welches eine Oberflächenausgestaltung hat, die im Wesentlichen mit einer rückseitigen Oberfläche der Kunststofflinse in einem Bereich, der eine Dicke von weniger als 2 mm hat, übereinstimmt, oder dass ein Material als Linsenhalter verwendet wird, das zu einer plastischen Deformation fähig ist, die in Übereinstimmung mit dem Bereich der rückseitigen Oberfläche von der Linse ist; und
(2) dass die Linse auf dem Linsenhalter derart gehalten wird, dass das Linsenkontaktelement mit der rückseitigen Oberfläche der Plastiklinse in dem gesamten Bereich, der eine Dicke von weniger als 2 mm hat, in engem Kontakt ist.

2. Linsenhalter zum Ausführen des Verfahrens nach Anspruch 1, umfassend einen Linsenhalterkörper und ein Linsenkontaktelement, das lösbar mit dem Linsenhalterkörper verbunden ist, wobei
das Linsenkontaktelement ein elastisches Material oder ein plastisch deformierbares Material umfasst und
das Linsenkontaktelement einen Oberflächenbereich hat, der mindestens einen zentralen Bereich umfasst, der im Wesentlichen mit einem Bereich auf einer rückseitigen Oberfläche von einer Linse, die darauf gehalten wird, übereinstimmt, umfassend mindestens einen zentralen Bereich der Linse.

3. Linsenhalter nach Anspruch 2, wobei das elastische Material des Linsenkontaktelements mindestens ein Material ist, das aus der Gruppe ausgewählt ist, bestehend aus Silikongummis, Urethangummis, Butylgummis, Nitrilgummis, hydrierten Nitrilgummis, Acrylgummis, Fluorgummis, Butadiengummis, Styrolbutadiengummis, Isoprengummis, Ethylenpropylengummis, Chlorprengummis, Naturgummis und Epichlorhydringummis.

4. Linsenhalter nach Anspruch 2, wobei das plastisch deformierbare Material des Linsenkontaktelements mindestens ein Material ist, das aus der Gruppe ausgewählt ist, bestehend aus Silikongelen, Polybutenharzen, nicht vulkanisierten Gummis und Öltonen (Engl.: oil clays).

## Revendications

1. Procédé destiné à produire une lentille traitée, comprenant une première étape dans laquelle un revêtement non durci est formé sur une surface d'une lentille en matière plastique, dans lequel le revêtement non durci comprend une composition photo-durcissable, la lentille en matière plastique présente une zone centrale dont l'épaisseur est inférieure à 2 mm, et une zone périphérique qui est plus épaisse que la zone centrale ; et une seconde étape dans laquelle la lentille qui présente le revêtement non durci est tenue sur un support de lentille, le revêtement non durci se situant vers le haut, et une lumière est appliquée à partir du dessus de la lentille de façon à durcir le revêtement, **caractérisé en ce que** :
dans la seconde étape, la lentille est tenue tout en satisfaisant aux conditions suivantes 1) et 2) :
1) le support de lentille qui comprend un élément en contact avec la lentille qui comprend un matériau élastique qui présente une configuration de surface se conformant sensiblement à une zone d'une surface arrière de la lentille en matière plastique dont l'épaisseur est inférieure à 2 mm, ou un matériau qui peut se déformer de manière plastique selon la zone de la surface arrière de la lentille, est utilisé en tant que support de lentille ; et
2) la lentille est tenue sur le support de lentille de façon à placer l'élément en contact avec la lentille en contact étroit avec toute la zone de la surface arrière de la lentille en matière plastique dont l'épaisseur est inférieure à 2 mm.

2. Support de lentille destiné à exécuter le procédé selon la revendication 1, comprenant un corps de support de lentille et un élément en contact avec la lentille fixé de manière amovible sur le corps de support de lentille, dans lequel :
l'élément en contact avec la lentille comprend un matériau élastique ou un matériau qui peut se déformer de manière plastique ; et
l'élément en contact avec la lentille présente une superficie qui comprend au moins une zone centrale se conformant sensiblement à une zone d'une surface arrière d'une lentille tenue dessus, qui comprend au moins une zone centrale de la lentille.

3. Support de lentille selon la revendication 2, dans lequel le matériau élastique de l'élément en contact avec la lentille, est au moins un matériau sélectionné dans le groupe constitué par des caoutchoucs silicones, des caoutchoucs uréthanes, des caoutchoucs butyles, des caoutchoucs nitriles, des caoutchoucs nitriles hydrogénés, des caoutchoucs acryliques, des caoutchoucs fluorés, des caoutchoucs butadiènes, des caoutchoucs butadiènes et styrènes, des caoutchoucs isoprènes, des caoutchoucs éthylènes et propylènes, des caoutchoucs chloroprènes, des caoutchoucs naturels et des caoutchoucs épichlorohydrines.

4. Support de lentille selon la revendication 2, dans lequel le matériau qui peut se déformer de manière plastique caractérisant l'élément en contact avec la lentille, est au moins un matériau sélectionné dans le groupe constitué par des gels de silicone, des résines polybutènes, des caoutchoucs non vulcanisés et des argiles huileuses.
